# EUROPEAN PATENT APPLICATION

(11) **EP 2 164 242 A1**
(43) Date of publication of application: **17.03.2010**
(21) Application number: 09386023.7
(22) Date of filing: 09.09.2009
(51) Int. Cl.: H04N 5/00, H04N 7/167, H04N 7/173

(54) **Video decoder for pushed content**

(30) Priority: 12.09.2008 GR 20080100584
(71) Applicant: Twin Peak S.A. Incorporated Industrial & Commercial Company of Advanced Technology Systems of Telecoms and Informatics with d.t., 173 41 Ag. Dimitrios, Athens (GR)
(72) Inventor: Mikroudis, Georgios, Nea Smirni 171 21 (GR)

(57) **Abstract**

The present invention refers to a decoder of pushed thematic content on-demand, which allows the user to «download» information from a remote provider and watch them whenever he wishes to. The content, after certifying that the user fulfils the necessary conditions through the access cards (1), is sent from the provider and stored in the embedded hard disk (7) of the decoder. The decoder receives the information from any network medium, whereas it comprises two tuners (11) and (12) for the simultaneous reception of content from the provider and from free satellite or digital channels. Moreover the transmission of the user choices to the provider is done either through a telephone line with the help of the embedded modem (13) either through text message from the embedded SIM card. Finally it comprises various outputs for connection to television or video.

## Description

The invention refers to a decoder device for pushed content (P.C.D.) which allows the exhibition of thematic content (films, movies, games, information pages, catalogues, etc.) on any television screen according to the user's choice, namely, whenever he wishes so. The content, before showing on the decoder's menu, has already been pushed and is found stored in the very same device of the decoder itself.

Until today decoders of this type, known as Set-Top-Boxes (STBs), whose content is recalled in real-time or live and shown on the television screen, are well known and used widely in the market. For example, the satellite TV decoders, or the digital terrestrial TV decoders or even Internet TV decoders (IP-TV), which decode and they display the live thematic content, e.g., of a channel on a television screen.

These classic decoders require a broad band for transmission of the content in video form, as the entire video content must be transmitted live to each receiver of this content on a 24 hour basis in encrypted or non encrypted form, and subsequently to be decoded by the decoder device with the help of a conditional access card (smart card - C.A.) whether it is a subscription channel or simple just display on the user's television of the content of a channel which is offered free without any need of using a conditional access card.

The on-demand access to the thematic content for the classic decoders is done either directly by changing channel from the remote control, either by selecting from a list (menu) and subsequently retrieving the thematic content (e.g., movie) from a central provider (server) which manages all the requests of the users that are connected with it. Thus, for example, if there are N users of the service, each one of which desires to watch the same content (e.g. a motion picture) M times, the specific content must be sent MxN times from the provider to the users consuming vast quantities of the resources of the system (in case it is internet capacity).

On the market there exist also decoders - digital encoders known as DVR (Digital Video Recorder) or PVR (Personal Video Recorder), which allow the digital storage in their hard disk, and subsequently, upon the user's demand, to play the stored content in the way he wishes (e.g., fast-forward, slow-forward, rewind, pause etc.).

Further, there are DVR decoders specially made for pushed video on-demand (Push VOD) for classic analogue television UHF, and recently for satellite television. Their disadvantage is that they are too specialized for the specific satellite platform and are limited only for playing movies stored in the DVR exclusively for the purposes of the Video-on-Demand, without the capability of pushing and exploiting other types of content (e.g., games), or the purchase of content (EST - electronic sell through), or the purchase of products (e-shopping), or the electronic betting (e-betting), because they do not have the capability of returning the information selected by the user, whilst they are limited to the specific transmission network, e.g., satellite or terrestrial only.

Lastly, there are personal computers (PCs), which through their operating system and the internet allow to the users the reproduction of thematic content video (Video On Demand), or the ordering-purchase of products (e-shopping), or electronic games (Video games), or electronic betting (e-betting) and the purchase of content (download-to-own). The main disadvantage of computers is their complexity, their high cost (equipment, software, upgrades, networks, subscriptions, etc.) but also the difficulty in use (requires continual learning of programs).

The Decoder of on-demand Pushed Content (P.C.D.), which the current invention refers to, combines the features of the classic decoder STB, where an access card is used for conditional access to the thematic content, with the features of the DVR, for on-demand reproduction of the stored content. In addition it gives to the user the capability of pushing information from any network medium (satellite, digital terrestrial, analogue terrestrial - UHF, internet, etc.) as well as the capability to return the information for the user choices, back to the central platform of content control. This is done directly either through telephone line, or through message of cellular telephony (SMS). This way the user can either pay for the on-demand viewing of the content (movie rental, Video-On-Demand), or to utilize the offered services (e.g. electronic games), or to order-purchase any product from the pre-stored catalogues of the P.C.D. (e-shopping), or to play electronic betting (e-betting), or to purchase through the system of EST (electronic-sell-through). As it is understood, the buyer can view the content, whenever he wishes so, with the combined use of the specific encoder of the pushed thematic content and the conditional access card.

A great advantage of the specific decoder is that it allows the user through the remote control, and only, to have access to a series of services such as rental of movies, electronic games, electronic commerce, electronic betting, and EST, for which today he must use a series of different devices such as STB - PVR decoders, personal computers, etc., as well as different kinds of networks like satellite, digital terrestrial or even the internet. Furthermore, it offers access though one and only one point, the same box of the P.C.D., inside which will already will have been forwarded the related content, the games, the buy catalogues, and in general all the lists for selection of the user.

The decoder of pushed thematic content of the present invention, offers to the user numerous advantages, and in the same time without the disadvantages of the devices used until today. As mentioned and previously, until today a great amount of resources is consumed for the multiple transmission of content to the users of the decoders. Contrary to the existing systems, the transmission of thematic content is done only once to all the users and moreover, whenever, and at the rate chosen by the manager of the system. This leads to a great economy of resources of the system (whether we have one user or one million users, and whether to user wishes to watch the film once or a hundred times, the cost for all the users to receive the thematic content is the same). Furthermore, the provider is able to select the way in which to send the thematic content to the subscribers of the service. This is possible thanks to the capability of connecting the specific encoder with an array of networks, like satellite, digital terrestrial, analogue, corporate network, internet, etc.

Additionally we must mention that the user has the advantage to watch the program he selected, as it is already stored in the embedded hard disk of the P.C.D., and in the way he desires (fast, slow, pause). Note here, that the operation of the hard disk is possible only through the specific decoder and the conditional access card which the user must have. With the use of the specific encoder we achieve also the direct charging of the holder for the service he has selected - bought either through his telephone line, or through cellular phone message (SMS) which can be sent either from the device or from the user himself. As a result, the provider of services has a two-way communication with the user, something that with today's encoders was not feasible. In comparison to all the other available technologies, the P.C.D. offers to its user information, services and products wherever, and whenever, with the only condition to have just a television screen. The access to him is done through the simplest device that exists and which everybody knows how to use, namely the remote control of the television. In this way we avoid the various kinds of decoders, subscriptions, and the use of complicate computing programs or the requirement for connection to the internet.

Lastly, with the present invention there is conditional access to the thematic content of the box though the conditional access card, as well as the capability of parental control of the kind of programs an services that can be used by an under-age person.

More characteristics of the invention and the advantages emanating from it are described with the help of the attached drawings.
Figure 1 shows the front view of the decoder.
Figure 2 shows the plan view of the decoder, with the various fixtures that comprise it, with the remote control of the device.
Figure 3 presents the back view of the decoder.
Figures 4 to 12 present a way of implementation of the invention by using an example of satellite connection for pushing thematic content of motion pictures to the P.C.D.

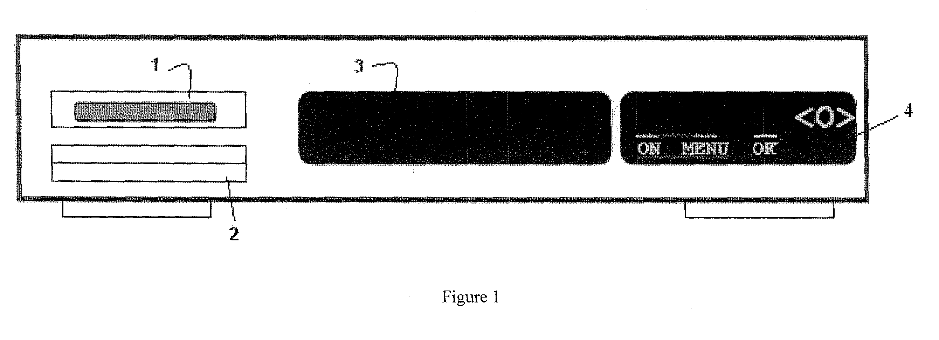

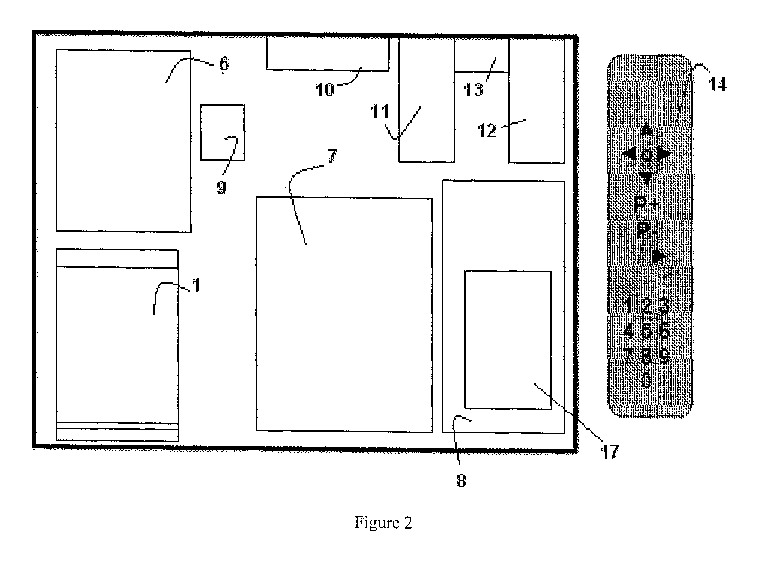

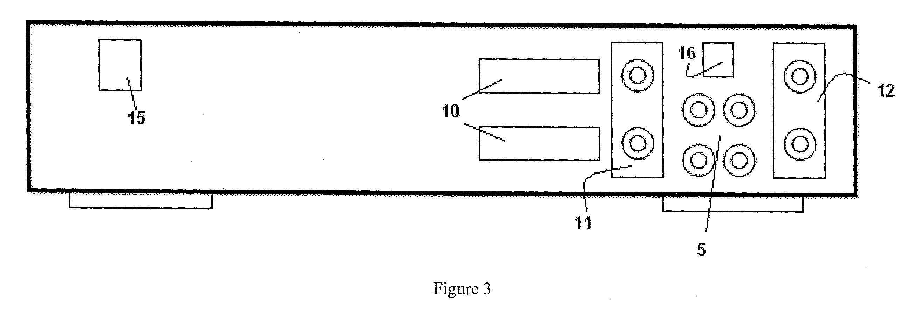

With reference to the attached Drawings 1, 2 and 3 we describe the decoder of pushed thematic content. The front view, Figure 1, shows the slot for the access card (1), which allows the provider to confirm that the user satisfies the preconditions in order to receive the material that will be send to him, also the CI clots (2) for using suitable PCMCI cards, in order for the user to be able, in case he wishes to connect with a satellite pay TV platform, or to connect an external hard disk into which the purchased thematic content is stored and reproduced with the help of only the specific decoder. The P.C.D., like all common decoders, is equipped with a screen (3) for showing the time, or the state of the device, as well as operation buttons (4) for the menu and browsing without the use of the remote control. Figure 2 besides the remote control (14) presents the slot (6) for the satellite or digital terrestrial television access, as well as embedded hard disk (7) where the entire content is stored, which content is sent by the provider to the user. Next to the hard disk (7) there exists the power supply (8) of the decoder, and also the module (17) with DVR functions. The P.C.D. is equipped with a SIM card slot (9), in order to create a channel of communication that informs the provider for the choice of the user through cellular telephone messaging. The back of the decoder, Figure 3, shows the outputs SCART (10) and Video Out, Audio Out, Composite (5) which can be used for connecting the P.C.D. with the television or as outputs if there is some kind of VCR. Figures 2 and 3 present the two tuners (11) and (12) for reception of the content sent by the provider, as well as the reception of satellite or digital channels. Lastly, Figure 2 shows the PSTN modem (13) for connecting the P.C.D with the telephone, in order to have the capability, to have a channel for informing the provider about the user choices (return channel), if the user wishes this to be done through fixed and not through mobile telephony.

The back side of the decoder for pushed thematic content, Figure 3, shows the power button (15) and the outlet of the PSTN modem (16) to which the user can connect a telephone cable and create a return channel in order to send to the provider his selections.

In the following, we present a detailed explanation of one way of implementing the invention with the use of an example, in order to explain clearly its application.

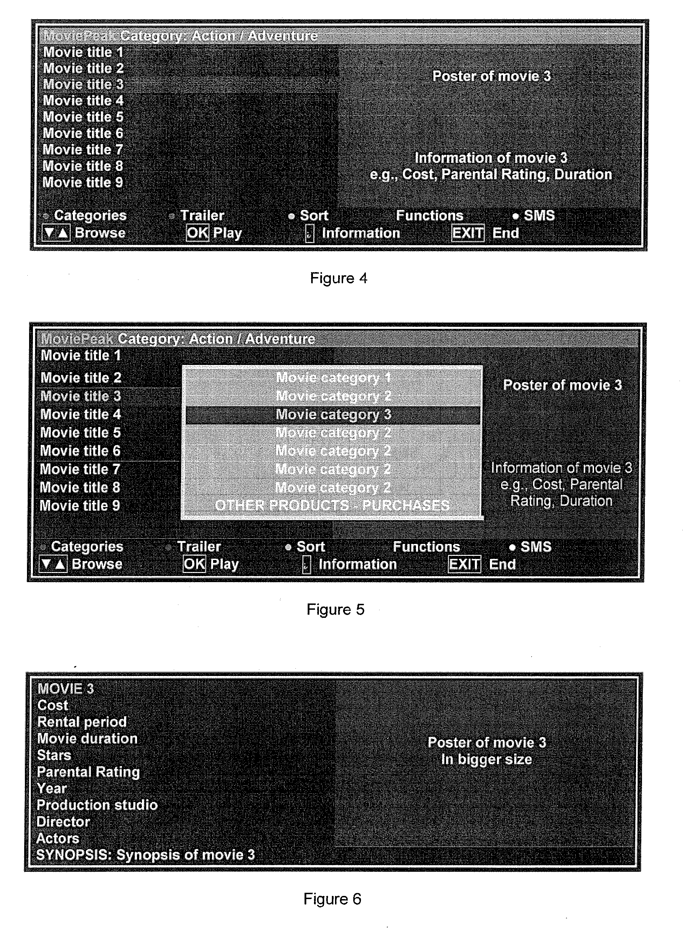

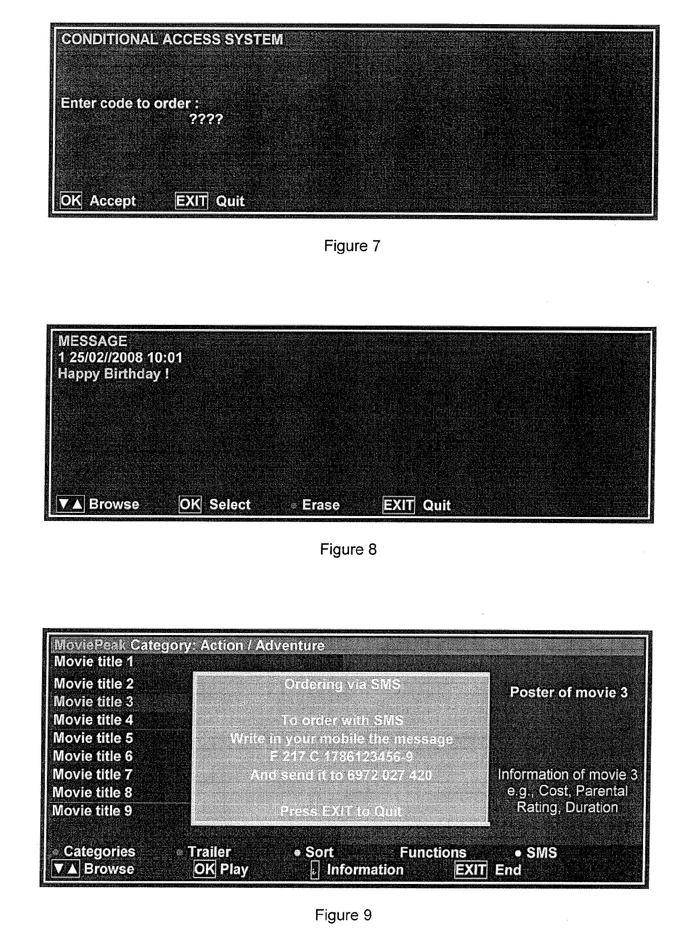

We assume that the user wishes to watch a motion picture, encoded in MPEG-2 or MPEG-4, which is already "downloaded" and stored in the encoder of pushed thematic content. The P.C.D. can have two tuners, the first exclusively for the "downloading" to its hard disk the content (as this may require more than one transmissions to complete a movie, which due to problems may not have completed its 100% storing in the hard disk during the first time), and the second one, which is optional, for the watching of other channels of satellite television. The available movies are presented to the user through a catalogue (menu), Figure 4, on the television screen. The user, by using the up-down buttons (channel change) of the remote control changes the selections of movies whilst the right part of the screen presents the poster of each movie as well as information for the cost and other data of the movie, like parental rating and duration. Also through the remainder buttons of the remote control (red, green, yellow, blow, white, arrows, OK, info, zoom, EXIT), Figure 5, the user can perform the desired action, like for example, to watch the trailer of the movie, to sort the movies according to their gender, or to see the available categories. By pressing the info button (i) the user can see more detailed information for the movie, Figure 6, like, e.g., the actors, the director, or a short description of the story of the movie. If now the user wishes to order the movie, he presses the OK button on his remote control, in which case the system requires him to enter a confirmation code, Figure 7, to proceed with his order. The central control platform besides a confirmation message can send also a message with any other content, Figure 8, in whichever decoder the provider of the service wishes to. Besides the order through the OK button, it is possible to order by sending a cellular telephone message (SMS). Figure 9, according to related instructions shown on the system screen. The provider confirms that the content has been purchased by sending back to the user a reply message and by allowing him to start the exhibition of the movie.

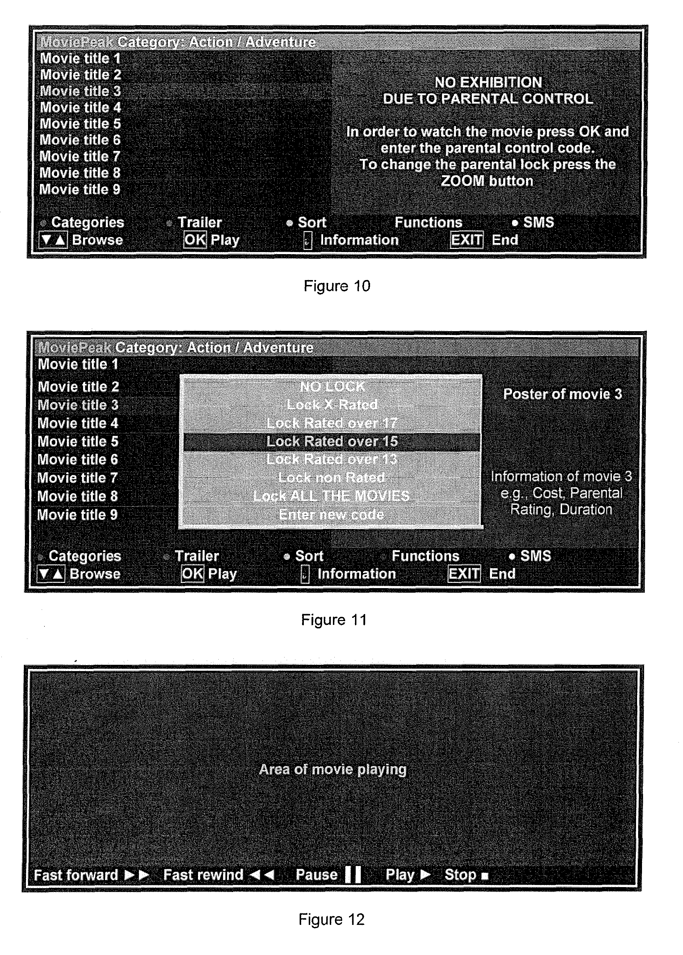

By definition, if the thematic content is X-rated for under-age persons, then it is not shown on the screen, informing the user of what he needs to do in order to see the content, Figure 10. Also, through the system the user has the capability to select if he wishes to lock also other categories of thematic content, this way protecting the under-age television viewers, Figure 11. From there on, the viewer, Figure 12, can watch the movie exactly as a DVD, namely fast-slow, forward-backward, still frame, etc.

Besides the example of buying and watching a movie, mentioned herein, the user in a similar way and following the orders given by the provider, can browse through menus related to the purchase of various kinds of computers, or to menus related to performing of bets. So, accordingly, he can be informed in more detail about the various kinds of computers he is interested in, or to buy one of them, or to play some bet, by stating of course the amount which he wishes to wager.

In conclusion, the most important advantages of the invention are: a) The content is always available from the hard disk of the decoder. b) There is a return channel via which the user communicates with the provider of the service. c) The content pushed to the encoder can be sent only once to all the "subscribers" of the thematic content. d) The content can be encrypted and its access be controlled under conditions through an access card (smart card).

Here we must note that the above description of the invention was done with reference only to an indicative example, as shown in the accompanying drawings. Thus, any change or modification regarding the Figures, sizes, employed materials, in case they do not constitute an invention step, are considered embedded in the purposes and the aims of the present invention. The characteristics of the present invention are summarized in the following claims.

## Claims

1. On-demand pushed thematic content decoder, **characterized by** the fact that it combines the features of a classic STB decoder, where an access card is used for the conditional access to the thematic content, with the features of the DVR for on-demand playing of the stored content, giving additionally to the provider the capability of pushing information through whatsoever network medium, as well as the capability of returning the information for the choices of the user, back to the central platform of content control, which is done either through a telephone line either through mobile telephony message; the encoder has also a slot for access card (1) which confirms that the user satisfies the conditions for receiving the information from the provider; tuners (11) and (12) for the reception of the thematic content sent and for the reception of satellite, and digital terrestrial channels respectively; embedded hard disk (7) where it stores the content received from the provider; embedded PSTN modem (13) and slot (9) for SIM card through which it informs the provider for his choices; it also has outputs SCART (10), Video Out, Audio Out and Composite (5) for its connection with the television or a VCR; and CI slots (2) for placement of PCMCI cards.

2. On-demand pushed thematic content decoder, according to the Claim 1, **characterized by** the fact that via the PCMCI cards can be connected to a satellite pay TV platform and with external disk where it stores the thematic content and which it can be played only through the specific encoder.
